# EUROPEAN PATENT APPLICATION

(11) **EP 1 088 502 A2**
(43) Date of publication of application: **04.04.2001**
(21) Application number: 00660169.4
(22) Date of filing: 28.09.2000
(51) Int. Cl.: A47G 1/16

(54) **Connector for hanging an article like a picture from a wire and a counterpart for securing the connector**

(30) Priority: 29.09.1999 FI 992079; 20.03.2000 FI 20000643; 20.03.2000 FI 20000117 U
(71) Applicant: Rantakangas, Tuure, 42700 Keuruu (FI)
(72) Inventor: Rantakangas, Tuure, 42700 Keuruu (FI)
(74) Representative: Helke, Kimmo Kalervo

(57) **Abstract**

The invention relates to a connector for hanging an article like a picture from a wire, such as a steel wire, in which connector (1) there is a frame (4), an arm (5) and a counterpart (7) jointed to it. In the connector, arm (5) is jointed to the frame (4) by means of a pivot joint (6), so that it is free to rotate against the counterpart (7), when the wire (2) remains between their counter surfaces (11, 12) and the connector thus locks onto the wire (2). The counter surfaces (11, 12) extend for a distance on the wire (2) that is many times its diameter, so that they always settle onto the wire (2) over their greatest length. The invention also relates to a counterpart in the picture for receiving the connector.

## Description

The present invention relates to a connector for hanging an article, particularly a picture, from a wire, such as a steel wire, and particularly such a connector, in which there is a frame and member in it for securing the connector to the picture, and a spring-loaded member for locking the connector to the wire.

The present invention also relates to a counterpart for securing the connector, for example, to the picture to be hung and particularly to its frame. The counterpart receives the connector protruding from the supporting construction. In the counterpart, there is an opening transversely to the direction of hanging, for receiving the head of the connector and, a narrower slot joining to the said opening from the opposite direction in relation to the hanging direction, for receiving the shank part of the connector which shank part is narrower than the head of the connector.

In exhibition areas, such art exhibitions and museums, pictures are hung from horizontal rails on wires from the upper part of the walls of the exhibition area, by means of hanging hooks resting on top of the rails and attached to the upper ends of wires. Particularly in changing exhibitions, it is appropriate to be able to freely select the location of the pictures, not only laterally along the rails, but also vertically by changing the lengths of the wires or preferably by using special connectors to lock the pictures onto the wires at the desired height.

A hanging device equipped with conical-wedge locking is known from Finnish publication print 84391, in which there are gripping jaws formed by the segments of a truncated cone, which are pressed against the wire by means of an inner conical collar surrounding the segments, and between which there is a spring to create a preliminary tension. The hanging hook is attached to the inner conical collar. The tensioning of the jaws takes place by pulling the inner cones down to force the jaws towards each other. In addition, the hanging device has an opening collar, in which there is an end part touching the upper part of the jaws. By pushing the opening collar towards the hook, the jaws are made to detach from the wire.

The above previously known hanging device has a thick construction and is very suitable for heavy pictures. Its great thickness hampers particularly the hanging of small and light pictures, which remain far from the wall.

It is previously known to hang pictures from a wall on a protruding screw or nail, in which case there is a cavity in the rear surface of the picture into with an opening leading into it, into which the head of the screw or nail fits, the opening continuing upwards as a narrower slot with a width greater than that of the shank of the screw or nail, but narrower that its head. An article or picture that is hung in this way cannot fall by itself or accidentally from the attachment, instead, detachment requires that the article or picture be lifted, so that the thicker head of the screw or nail in the recess coincides with the opening in the rear surface of the picture and only after this can the article or picture be lifted completely away from the attachment by pulling it away from the wall.

However, the picture is easily detachable, if so desired. In exhibition areas such as art museum and galleries, it is particularly important that the articles and pictures hung in the areas cannot be detached at least very easily by unauthorized persons. This condition is not, however, met by the aforementioned method of hanging according to the state of the art.

The present invention is thus intended to achieve a connector, which is thinner and simpler and more advantageous than previously for hanging an article such as a picture or similar reliably from a wire or similar, in such a way that, after locking, the connector cannot slide down along the wire, but, however, also in such a way that the connector can be easily slackened and removed from the wire.

The present invention is also intended to achieve a quick-locking counterpart to be attached to the frame of the picture, which receives a connector protruding from particularly the connector of the supporting structure in such a way that a hung picture cannot be removed from the counterpart without special measures, though also in such a way that a person acquainted with the system can easily attach the counterpart to the connector and also remove it form the connector. A connector and counterpart according to the invention can be applied together to create a particularly advantageous hanging system for a picture. The total construction can be made extremely slim, but nevertheless reliable.

The characteristic features of a connector according to the invention are disclosed in the accompanying Claim 1 and the characteristic features of a counterpart specifically adapted to the connector are disclosed in Claim 5. Preferred embodiments are disclosed in the subclaims.

In a recommended embodiment of the invention, the connector counterpart and frame and possibly the opposing parts of the arm are plate-like, so that they support each other over an extensive area, when the thickness of both the frame and the counterpart are the same as, or at most slightly larger than that of the wire, on which they are intended to be locked.

The frame of the connector is preferably elongated, in which case the pivot point of the arm lies between its ends and the arm is arranged to turn towards the end of the frame that is opposite to the attachment member of the picture, to lock the wire between the frame and the counterpart of the arm.

In order to ensure the locking of the wire, the connector has preferably a countersurface, which is at the opposite end of the elongated frame to the attachment member of the picture, facing away from the pivot point and towards the counterpart of the arm, and which is preferably straight, to achieve the largest possible contact surface with the wire. In this case, the surface of the edge of the arm counterpart facing the frame is also straight and very preferably serrated, to create a firm hold on the wire's hard and smooth surface. The counterpart is also preferably attached with a pivot point to the arm allowing it to turn around an axis parallel to the pivot point, so that the straight and serrated surface of the counterpart lies against the wire for all of its length.

According to the present invention, the unauthorized removal of the connector in the counterpart is prevented, or at least made substantially more difficult, by the fact that, at the opening in the counterpart, there is a tongue that can be forced flexibly inwards towards the hung article, the upper edge of which on the slot side is at such a distance from the bottom of the slot that the tongue snaps behind the connector when the connector's shank part is pushed upwards in the slot when the connector is locked in place. In order to detach the connector from the counterpart, it is not sufficient to lift the hung article and pull it away from the connector, because the tongue prevents the head of the connector from moving backwards towards the opening. To detach the connector, the tongue in the counterpart must also be pressed simultaneously inwards towards the hung article, and away from in front of the head and shank of the connector. The person carrying out this measure must know about it beforehand, because the counterpart is hidden behind the hung article, such as a picture, between it and the wall.

At the slot of the counterpart, there is preferably a second tongue, which, when the head and shank of the connector are pushed into the slot, gives way and moves inwards towards the hung article, forcing the head of the connector against the inner surfaces on each side of the slot, so that the tongue at the opening does not wedge between the thicker head of the connector and the said inner surfaces, freeing the tongue so that it can be pressed inwards towards the hung article to free the counterpart from the connector.

The tongue or tongues are preferably cut from the same spring sheet-metal blank to which they are attached, so that the spring sheet-metal blank with the tongues is fitted between the counterpart and the article to be hung after the tongues have first been bent away from the surface of the sheet blank, allowing the tongues to be flexibly forced back towards the surface of the sheet-metal blank.

The tongue or tongues are preferably at least partly wider than the opening and slot of the counterpart, so that the said parts press against the inner surfaces on each side of the edges of the opening and slot, but cannot go outside the opening and slot, where they could catch on surrounding protrusions and bend or be bent.

In one preferred embodiment, the counterpart is an elongated arm, in one end of which there is a component, which is attached to the article to be hung, and which turns around an axis that is transverse to the direction of hanging, and in the opposite end there are the said opening, slot, and tongue or tongues for attaching the connector.

The length of the arm and the distance of the attachment point from the outer edge of the article to be hung such as a picture are selected so that the arm of the counterpart attached to the article to be hung can be turned to a position, in which its end to be attached to the connector extends outside the outer edge of the article to be hung, to facilitate attaching and also detaching the connector, but in which it in the hanging position is hidden between the hung article and the wall, so that this possibility is not obvious when the hung article is examined from in front.

For reasons of manufacturing technique, the tongue at the elongated opening in the counterpart is preferably of one piece with the arm, but is cut from it for some distance along the side edges, so that the tongue is essentially longer than the diameter of the opening, when it can be flexibly forced away from in front of the opening.

In the following, the invention is disclosed in greater detail with reference to the accompanying drawings, in which
- Figure 1: shows an end view of a preferred embodiment of the invention locked onto the wire,
- Figure 2: shows a side view of the same embodiment without the uppermost sheet component of the arm,
- Figure 3: shows a similar view to that in Figure 2, but with the connector in the open position,
- Figure 4: shows an axonometric view of the attachment of the connector to the counterpart in the frame of a picture,
- Figure 5: shows a variation of the connector,
- Figure 6: shows a vertical view from the wall side of the counterpart to be attached to the frame or stretcher of the picture,
- Figure 7: shows a side view of the same counterpart,
- Figure 8: shows vertical views of the sheet-metal blanks appearing in Figures 6 and 7,
- Figure 9: shows a vertical view of another counterpart according to the invention, in two different positions, attached behind a picture,
- Figure 10: shows a side view of the counterpart of Figure 9,
- Figure 11: shows a vertical view from the picture side of a third embodiment of the invention, with the connector attached to the counterpart, and
- Figure 12: shows a side view of the same counterpart as that in Figure 11.

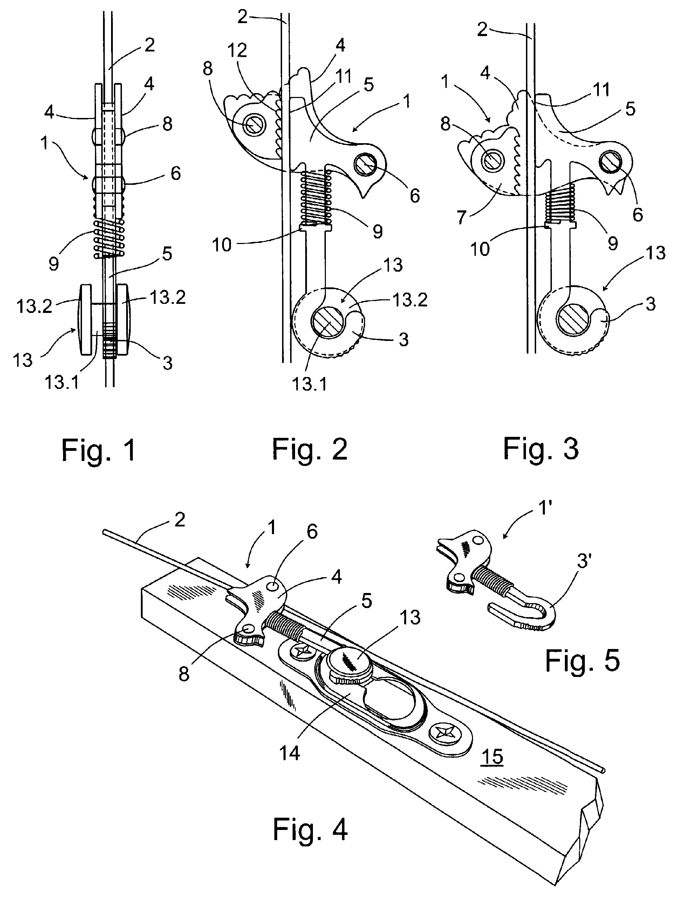

In Figures 1 - 3, the connector according to the invention is generally marked with the reference number 1 and the wire, to which it is intended to be attached, is marked with the reference number 2. Connector 1 is formed of an elongated plate-like frame 4, at the lower end of which is a hook 3 or similar for attaching the picture to connector 1. In lower of the two ends of the slanting transverse fork of the T-shaped upper end of the connector, there is a pivot point 6, to which the arm 5, assembled from plate-like components on either side of the frame 4, is rotatably fitted. In the connector according to the figures (maximum load 15 kg), the plate frame is of 0,6-mm spring steel, the arm of 2-mm spring steel, and the counterpart of 2-mm tool steel, the distance between the pivot points being about 15 mm. The pivot pins are of stainless steel.

In the opposite, upper end of the slanting transverse fork of the T-shaped upper end of the connector, there is a straight counter surface 11 parallel to elongated frame 4 and pointing away from pivot point 6, and lying between the plate-like components of arm 5, as can be most clearly seen from Figure 1.

Generally, a stud 13, in which there is a thinner shank 13.1 with flanges 13.2 on either side of it, is used in hook 3. By means of the shank 13.1, stud 13 can be inserted into the opening of a suitable counterpart, when the outer flange 13.2 of stud 13 will lie behind the support.

At the opposite end of arm 5 to its pivot joint 6, is a plate-like counterpart 7 between the plate-like components of arm 5, and which rotates around an axle 8 parallel to pivot point 6, and the frame 4 of which and the surface 12 in the side edge facing counter surface 11 is also straight and, in addition, serrated. It is preferably manufactured from very hard tool steel, so that it grips very tightly on the hard and smooth surface of the wire between it and the counter surface of frame 4 around elongated frame 4, when the coil spring 9, which is wrapped between the thickened part 10 and arm 5, forces arm 5 to turn around its pivot point 6 to press counterpart 7, jointed to the opposite end of arm 5, against wire 2 between it and counter surface 11 of frame 4, as shown in greater detail in Figure 2.

The thickness of counterpart 7 between frame 4 and arm 5 is selected according to the thickness of wire 2, so that the wire can run between the plate-like components of arm 5 arranged on both sides of frame 4 and counterpart 7, but also so that it cannot wedge between either plate-like component of arm 5 and frame 4 or counterpart 7.

Pivot point 6 of arm 5 is closer to the picture's weight-carrying attachment member 3 at the lower end of frame 4, than it is to the frame's counter surface 11, so that counterpart 7 with its serrated surfaces 12 grips wire 2 more tightly as more weight is hung on the picture's attachment member 3.

Because counterpart 7 of arm 5 is attached to pivot between the plate-like components of arm 5, the entire length of the serrated surface 12 of the straight side edge of counterpart 7 always settles against wire 2, giving counterpart 7 the best possible grip on wire 2.

It can be seen from Figure 4 that the manner of hanging a picture using the connector and especially using the counterpart to be disclosed later remains quite thin. In this figure, stud 13 is detachably secured to counterpart 14 of frame 15 of the picture. The total depth, i.e. the distance of the picture from the wall, is only 6 - 7 mm.

If the picture is only equipped with conventional hanging loops, the variation 1' on Figure 5 can be used. In this variation, a traditional hook 3' permits a hanging-loop or nail to be supported from the connector.

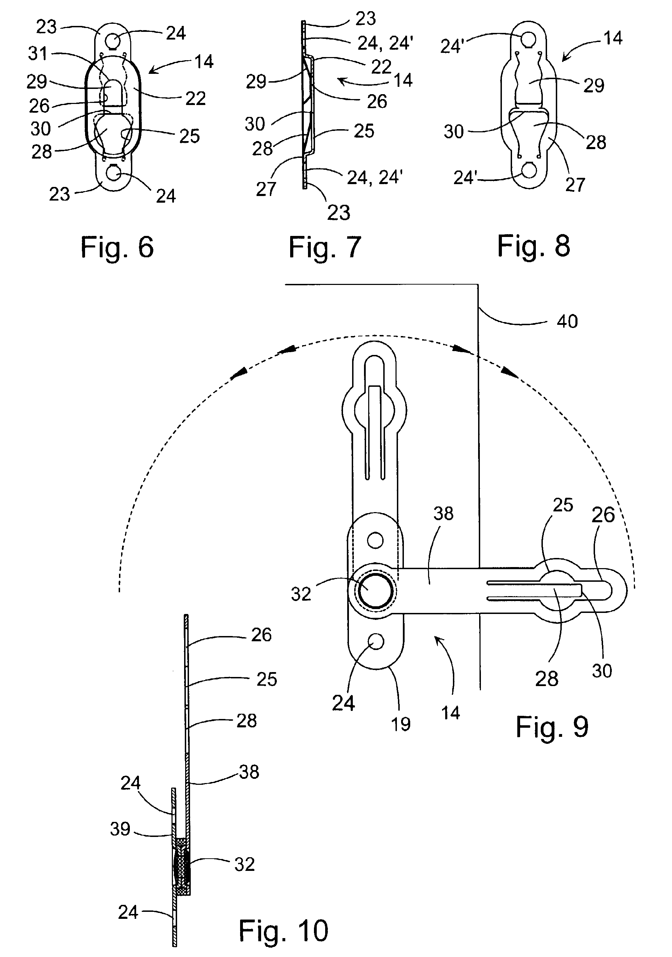

The counterpart shown in Figures 6 and 7 is generally marked with the reference number 14, which has lugs 23 at its opposite ends, in which there are holes 24 for attaching the counterpart to the rear surface of the frame in such a way that the attachment holes coincide. There are preferably two counterparts 14 on each side of the rear surface of the article, which are arranged to readily receive the connectors according to Figures 1 - 3.

In order for there to be no need to make recesses in the rear surface of the frame, the surface of the cover component 22 between the lugs of counterpart 14 is raised to such a distance from the attachment surface that the head of the connector will fit inside counterpart 14. In the said raised cover component 22 of counterpart 14 there is an opening 25 and, in line with attachment holes 24, a slot 26, which connects with opening 25. When counterpart 14 is attached, slot 26 thus extends upwards from opening 25 and terminates in the inner end 31 of the slot.

The diameter of opening 25 is so large that the head of the connector can be fitted through it, between cover component 22 of counterpart 14 and the frame of the picture, whereas the width of slot 26 is less than the head of the connector, but slightly larger than its shank.

Between the cover component 22 of counterpart 14 and the frame of the picture there is a sheet-metal blank 27, which is shown in greater detail in Figure 8. The outline of sheet-metal blank 27 is the same shape and size as cover component 22 of counterpart 14 with its lugs 23 and it also includes corresponding holes 24' for attachment. Tongues 28 and 29, which are in line with and between holes 24', are cut from sheet-metal blank 27.

As can be seen from Figure 7, tongues 28 and 29 are bent from the surface of sheet-metal blank 27, so that they lie flexibly against the inner surface of cover component 22 at opening 25 and slot 26. Tongues 28 and 29 are not able to protrude through opening 25 and slot 26, as tongues 28 and 29 are at least slightly wider than these, as can be clearly seen in Figure 6.

The upper end edge 30 of tongue 28 extends as far as slot 26, so that it snaps behind the head of the connector when that is pushed under slot 26 between cover component 22 and the frame. Thus, the head of the connector cannot be moved back to the location of opening 25, without tongue 28 being forced away from cover component 22 towards the frame.

Tongue 29 is, for its part, shaped in such a way that it presses flexibly towards the frame when the head of the connector pushes under cover component 22 and its shank into slot 26 and thus presses the head of the connector against the inner surface of cover component 22, so that the other tongue 8 cannot wedge between the head of the connector and the inner surface of cover component 22, when it is wished to detach the connector from counterpart 14.

The counterpart 14 shown in Figures 9 and 10 is formed by an elongated arm 38, at one end of which there is a component 39, in which there are holes 24 for attaching, and which rotates around a transverse axle 32 and is attached to the rear surface of the frame 40 of the picture. At the opposite end of arm 38, there is also a transverse opening 25 and a connecting longitudinal slot 26 in between opening 25 and the said opposite end of arm 38. In the same way as disclosed above, the head of the connector can be fitted into opening 25 and its shank can be taken into slot 26.

To lock the connector into the counterpart, there is a longitudinal tongue 28 in opening 25 of arm 38, the head of which extends to the opening of slot 26. Tongue 28 is formed from arm 38 and is considerably longer than the diameter of opening 25, so that tongue 28 bends flexibly when the head of the connector is pushed into opening 25.

The length of arm 38 and the point of attachment of attachment component 39 of counterpart 14 from the edge of frame 40 are selected in such a way that the end of arm 38 with opening 25 extends to the outside of the side edge of frame 40, if arm 38 lies transversely to the side edge of frame 40, but remains hidden behind frame 40 if counterpart 14 is in the hanging position, i.e. more or less parallel to the side edge of frame 40. Both positions are shown in Figure 24.

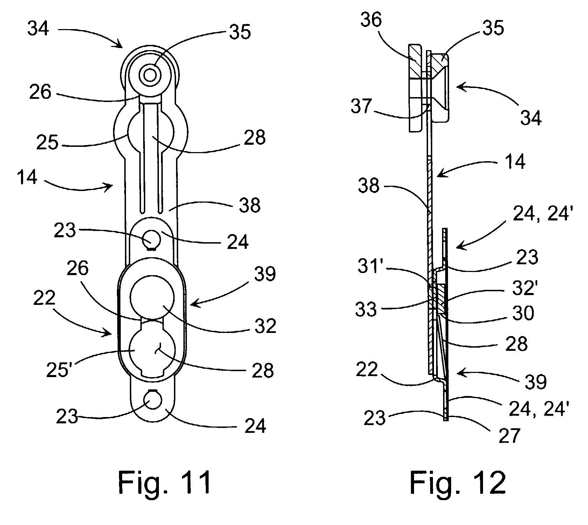

Figures 11 and 12 show a similar embodiment to that in Figures 9 and 10, but with the difference that the attachment component shown at one end of arm 38 in Figures 9 and 10 has been replaced with counterpart 14 as in Figures 6 and 7, to which arm 38 can be locked using its axle pin 32' at the same end, in the same way as the head of the connector is locked to counterpart 14 of Figures 6 and 7.

Figures 11 and 12 also show the connector's connector piece 34, locked to slot 36 in the opposite end of arm 38, which is formed of two round flanges 35 and 36 connected to each other by means of a smaller diameter part 37 forming a sunk groove, the diameter of flange 35 being slightly smaller than the width of opening 25 of arm 35, so that flange 35 of connector piece 34 can be fitted in to opening 25 against the spring pressure of tongue 28 and the grooved part 37 of connector piece 34 is so narrow that it can fit into slot 26 of arm 18, when tongue 28 will snap behind flange 35, locking connector piece 34 to arm 38.

Connector piece 34 can be attached to the wall with a screw or nail, or to the lower end of a wire hanging from a rail in the upper part of a wall, by means of, for example, a hook.

It is obvious that the invention can be varied within broad limits within the scope of the accompanying Claims, as one versed in the art will well understand. The picture attachment member in the lower end of the frame need not be hook-shaped, as long as it can be attached to the frame of the picture. The spring member may also be of some other kind than a coil spring, on condition, however, that the spring element is between the frame and the arm.

## Claims

1. A connector for hanging an article like a picture from a wire, such as a steel wire, in which connector (1) there is a frame (4), an arm (5) and a counterpart (7) supported to it, in which connector the arm (5) is jointed to the frame (4) by means of a pivot joint (6), so that it is free to rotate against the counterpart (7), when the wire (2) remains between their counter surfaces (11, 12) and the connector thus locks onto the wire (2), characterized in that the counterpart (7) too is pivot-jointed to the frame (4) and the said counter surfaces (11, 12) extend for a distance on the wire (2) that is many times its diameter, so that they always settle onto the wire (2) over their greatest length.

2. A connector according to Claim 1, characterized in that both the counterpart (7) and the frame (4) and preferably the arm (5) are plate-like, so that the thickness of the counterpart (7) and the frame (4) is essentially the same as that of the wire (2), to which they are intended to be attached.

3. A connector according to Claim 1 or 2, characterized in that, at the opposite end of the elongated frame (4) to the picture's attachment member (3), there is a counter surface (11) directed away from the pivot joint (6) of the arm (5).

4. A connector according to one of Claims 1 - 3, characterized in that the connector includes a spring member (9), which is arranged to turn the arm (5) against the wire (2).

5. A counterpart to be attached to the picture, by means of which a connector protruding from the structure to be supported is received, in which counterpart (14) there is an opening (25) essentially transversely to the direction of hanging, for receiving the head of the connector and a narrower slot (26) joining to the said opening (25) from the opposite direction in relation to the hanging direction, for receiving the shank part of the connector, which shank part is narrower than the head of the connector, characterized in that at the opening (25) of counterpart (21) there is a tongue (28) that can be forced flexibly towards the article to be hung, the end edge (30) of which next to the slot (26) is at such a distance from the inner end (31) of the slot that it snaps behind the connector when the shank of the connector is pushed into the slot (26) to lock the connector in place.

6. A counterpart according to Claim 5, characterized in that, between the picture to be hung and the counterpart (14) attached to it there is, at the slot (26), a second tongue (29), which can be forced flexibly towards the article to be hung, for pressing the head of the connector in the counterpart (14) against the counterpart (14).

7. A counterpart according to Claim 5 or 6, characterized in that the tongues (28 and 29) are of a single piece with blank (27), from which they are separated and which is between the counterpart and the article to be hung.

8. A counterpart according to Claim 5, 6, or 7, characterized in that the tongue (28) or tongues (28 and 29) are at least partly wider than the opening (25) and the slot (26).

9. A counterpart according to Claim 5, characterized in that the counterpart (14) is elongated and that it has, preferably at one end, a component (39) attached to the article to be hung, rotating around a transverse axis (32) to the direction of hanging, and, at a distance to it, preferably at the other end, the said opening (25), the slot (26) of the opening, and the tongue (28).

10. A counterpart according to Claim 9, characterized in that the flexible tongue (28) is formed form the counterpart and is essentially longer than the diameter of the opening (25), so that the part of it at the opening (25) can be forced away from the opening.

11. A counterpart according to Claim 9 or 10, characterized in that, in the component (39) to be attached to the article to be hung and rotating around a transverse axis in relation to the hanging direction, there is, preferably at the other end, an opening (25) essentially transversely to the direction of hanging, for receiving the pivot pin (32') protruding transversely from the counterpart (14), and, in the opposite direction in relation to the direction of hanging a narrower slot (26) connecting to the said opening (25) for receiving the narrow shank (33) of the pivot pin (32'), when at the opening (25) of the component (39) to be attached to the article to be hung there is a tongue (28) that can be flexibly forced towards the article to be hung, the end edge (30) of which is at such a distance from the inner end (31) of the slot that it snaps behind some part of the pivot pin (32') when the shank (33) is pushed into the slot (36), to lock the elongated counterpart (1) in place.
